# EUROPÄISCHE PATENTSCHRIFT

(11) **EP 3 528 634 B1**
(45) Veröffentlichungstag und Bekanntmachung des Hinweises auf die Patenterteilung: **09.09.2020**
(21) Anmeldenummer: 17791917.2
(22) Anmeldetag: 20.10.2017
(51) Int. Cl.: A21C 3/02

(54) **VORRICHTUNG ZUM FORMEN EINES TEIGBANDES**
APPARATUS FOR MAKING A DOUGH SHEET
APPAREIL POUR LA PRODUCTION DE BANDES DE PÂTE

(30) Priorität: 21.10.2016 AT 509672016
(43) Veröffentlichungstag der Anmeldung: 28.08.2019
(73) Patentinhaber: König Maschinen Gesellschaft m.b.H., 8045 Graz (AT)
(72) Erfinder: STELZER, Hannes, 8502 Lannach (AT); RAUCH, Eduard, 8321 St. Margarethen (AT); RADL, Markus, 8280 Fürstenfeld (AT); STAUFER, Wolfgang, 1020 Wien (AT)
(74) Vertreter: Wildhack & Jellinek
(86) Internationale Anmeldenummer: PCT/AT2017/060280
(87) Internationale Veröffentlichungsnummer: WO 2018/071948

(56) Entgegenhaltungen:
- EP-A2- 1 913 817
- EP-A2- 2 111 757
- GB-A- 652 550
- GB-A- 2 528 336
- US-A- 3 433 181

## Beschreibung

Die Erfindung betrifft eine Vorrichtung zum Formen eines Teigbandes gemäß dem Oberbegriff des Patentanspruchs 1.

GB 652550 A, EP 2111757 A2 und GB 2528336 A offenbaren verschiedene Vorrichtungen zum Formen eines Teigbandes.

Aus dem Stand der Technik sind diverse Vorrichtungen bekannt, die mittels Press- und Formwalzen eine oder mehrere Teigchargen zu einem Teigband formen. Derartige Vorrichtungen sind auch unter dem Namen "Walzenstühle", Teigbandformer" etc., bekannt. Die aus dem Stand der Technik bekannten Vorrichtungen werden meist für die Herstellung von Feingebäck eingesetzt und erfreuen sich aufgrund der geringen Kosten und der Einfachheit steigender Beliebtheit. Durch die ständige Weiterentwicklung werden derartige Vorrichtungen auch vereinzelt für Hefeteige bzw. für andere Teige für Backwaren verwendet. Nachteil der aus dem Stand der Technik bekannten Systeme ist, dass die Hefeteige zu stark belastet werden und die Vorrichtungen besonders bei klebrigen Teigen nur schwer zu reinigen sind, womit diese den immer höher werdenden hygienischen Anforderungen nicht vollkommen oder nur teilweise entsprechen können. Der Aufbau dieser Walzeneinheiten erfordert aufgrund der erforderlichen Drücke und Antriebsmomente meist an beiden Seiten der Walzen angeordnete Lagerungen. Durch die beidseitigen Antriebselemente ist die Reinigung und Bedienung besonders schwierig und ungünstig, sodass die gültigen Hygienevorschriften nur mit sehr hohem Aufwand eingehalten werden können.

Aufgabe der vorliegenden Erfindung ist es daher, eine Vorrichtung der eingangs genannten Art zu schaffen, die eine einfache Reinigung der Vorrichtung ermöglicht sowie eine breite Palette von Teigen verarbeiten kann.

Diese Aufgabe wird durch die Merkmale des Anspruchs 1 gelöst. Dabei ist vorgesehen, dass die Einzugswalze, die Formwalze und die Austragswalze, fliegend gelagert sind und dass die Lagerungen der Einzugswalze, der Formwalze und der Austragswalze auf einer Seite der Vorrichtung neben der Teigkammer angeordnet sind. Durch die fliegende Lagerung weist die Vorrichtung eine Maschinenseite auf, der die Antriebselemente und Lagerungen angeordnet sind, und eine Bedienseite, an der die Walzen und die Teigkammer zugänglich sind, auf. Dadurch wird insbesondere die Reinigung und Wartung deutlich erleichtert, da keine Maschinenteile den Zugang zur Teigkammer und den Walzen behindern.

Um die Lagerungen und Antriebselemente der Vorrichtung vor Verschmutzung zu schützen, ist erfindungsgemäß vorgesehen, dass die Lagerungen der Einzugswalze, der Formwalze und der Austragswalze in einem Lagergehäuse angeordnet sind, das insbesondere hermetisch abgedichtet ist.

Weiters ist durch die hermetische Abdichtung der Antriebs- und Lagerelemente der Vorrichtung ein geringerer Aufwand bei der Reinigung der Vorrichtung erforderlich, da die meist eingesetzten aggressiveren Reinigungsmittel nicht an die Lagerungen und Antriebselemente der Walzen geraten können.

Eine vorteilhafte Ausführungsform der erfindungsgemäßen Vorrichtung wird bereitgestellt, indem die Vorrichtung eine Schwenkvorrichtung umfasst, wobei die Einzugswalze und/oder die Formwalze und/oder die Austragswalze mittels der Schwenkvorrichtung verschwenkbar sind, wobei der Abstand der Achse der Einzugswalze und/oder der Formwalze und/oder der Austragswalze zu den Achsen zumindest einer der jeweils anderen Walzen verstellbar ist. Durch die Anordnung der Walzen oder einzelner Walzen auf einer Schwenkvorrichtung ist es möglich, die Teigkammer durch Verschwenken der einzelnen Walzen zu vergrößern und dadurch die Reinigung zu erleichtern. Weiters ist es möglich, durch Verschwenken der Formwalze oder der Austragswalze den Spalt zwischen diesen einzustellen und somit die Dicke des produzierten Teigbandes einstellen zu können.

Vorteilhaft ist vorgesehen, dass die Schwenkvorrichtung einen Schwenkhebel umfasst, wobei der Schwenkhebel um eine Schwenkachse, insbesondere mittels eines Hydraulik- oder Pneumatikzylinders oder elektromechanisch, verschwenkbar ist, und wobei die Lagerung der Einzugswalze und/oder der Formwalze und/oder der Austragswalze in dem Schwenkhebel angeordnet ist, wobei bei Verschwenken des Schwenkhebels der Abstand der Achse der Einzugswalze und/oder der Formwalze und/oder der Austragswalze zu den jeweils anderen Walzen verstellbar und einstellbar ist.

Um den Teig vorteilhaft von den Walzen ablösen zu können, ist vorgesehen, dass die Vorrichtung einen ersten Abstreifer umfasst, wobei der erste Abstreifer am Umfang der Formwalze anliegt, wobei Teig vom Umfang der Formwalze mittels des ersten Abstreifers abhebbar ist und wobei insbesondere der erste Abstreifer verschwenkbar und/oder verschiebbar angeordnet und vom Umfang der Formwalze abhebbar ist. Durch die Anordnung des ersten Abstreifers am Umfang der Formwalze wird ermöglicht, dass der Teig vollständig von der Formwalze abgelöst wird und in der Teigkammer oder von der Austragswalze vorteilhaft weitergeführt bzw. gehalten wird. Weiters kann durch die Anordnung des ersten Abstreifers am Umfang der Formwalze die Dicke des produzierten Teigbandes vorteilhaft vorgegeben werden und eine glatte Oberfläche des produzierten Teigbandes erzeugt werden.

Das produzierte Teigband kann einfach von der Austragswalze abgelöst werden, indem die Vorrichtung einen zweiten Abstreifer umfasst, wobei der zweite Abstreifer am Umfang der Austragswalze anliegt und Teig, insbesondere das geformte Teigband, von der Austragswalze abhebbar ist und wobei insbesondere der zweite Abstreifer verschwenkbar und/oder verschiebbar angeordnet und vom Umfang der Austragswalze abhebbar ist.

Weites wird durch den zweiten Abstreifer, der am Umfang der Austragswalze anliegt, die Oberfläche des Teigbandes geglättet bzw. positiv beeinflusst und es wird weiters verhindert, dass Teig oder Teigreste am Umfang der Austragswalze hängen bleiben.

Um die Reinigung der Vorrichtung weiter zu verbessern, ist vorteilhaft vorgesehen, dass der erste Abstreifer und/oder der zweite Abstreifer, vorzugsweise manuell, lösbar, insbesondere auf einem Dorn ausziehbar, an der Vorrichtung angeordnet sind.

Um den Zugang zu den Walzen weiter zu erleichtern und eine Reinigung der Vorrichtung besser zu ermöglichen, ist vorgesehen, dass die Zuführeinrichtung einen Fülltrichter umfasst, der um eine Schwenkachse verschenkbar ist.

Der Zugang zur Teigkammer und damit dessen Reinigung wird besser ermöglicht, indem dass die Abdeckschilde lösbar an der Vorrichtung befestigt sind.

Um die Abdeckschilde einfach zu fixieren und die Teigkammer wirkungsvoll abzudichten, ist erfindungsgemäß vorgesehen, dass die Vorrichtung zumindest einen Spannzylinder, vorzugsweise drei Spannzylinder, umfasst, der vorzugsweise in dem Lagergehäuse angeordnet ist, wobei der Spannzylinder zumindest eines der Abdeckschilde in Richtung der Achse der Einzugswalze und/oder der Formwalze und/oder der Austragswalze an die Einzugswalze, die Formwalze und die Austragswalze andrückbar ist.

Erfindungsgemäß ist vorgesehen, dass die Einzugswalze und/oder die Formwalze und/oder die Austragswalze hohl ausgebildet ist, wobei die Vorrichtung zumindest eine, insbesondere drei, längliche Spannachse aufweist, wobei die Spannachse, insbesondere jeweils eine der drei Spannachsen, durch die Einzugswalze oder die Formwalze oder die Austragswalze durchgeführt ist und die jeweilige Walze auf der Spannachse, insbesondere der jeweiligen Spannachse, drehbar gelagert ist, wobei die Spannachse mit dem Spannzylinder, insbesondere alle Spannachsen über einen Spannflansch mit dem Spannzylinder, verbunden ist und zumindest eines der Abdeckschilde, insbesondere der dem Lagergehäuse bezüglich der Walzen gegenüberliegende Abdeckschild, mit der Spannachse derart, insbesondere lösbar, verbunden ist, dass bei Betätigung des Spannzylinders zumindest einer der Abdeckschilde, insbesondere der dem Lagergehäuse gegenüberliegende Abdeckschild, in Richtung der Achse der Einzugswalze, der Formwalze und der Austragswalze an die Einzugswalze, die Formwalze und die Austragswalze andrückbar ist.

Um den betriebsbereiten Zustand der Vorrichtung vor Inbetriebnahme feststellen zu können, ist vorgesehen, dass die Vorrichtung, insbesondere die Spannzylinder, eine Anzahl von Sensoren, umfasst, mit der die Lage und/oder das Vorhandensein der Einzugswalze und/oder der Formwalze und/oder der Austragswalze und/oder der Abdeckschilde und/oder des ersten Abstreifers und/oder des zweiten Abstreifers ermittelbar ist.

Durch die Sensoren kann weiters sichergestellt werden, dass keine der Teile oder Elemente der Vorrichtung fehlen bzw. falsch eingesetzt sind und damit Fehlfunktionen bzw. das Ausquellen des Teiges oder fehlerhaft produzierte Teigbänder verhindert werden können.

Um das produzierte Teigband einfach aus der Vorrichtung ausbringen zu können und weiteren Bearbeitungsstationen bzw. weiteren Bearbeitungsschritten zu zuführen, ist vorgesehen, dass die Vorrichtung eine Fördereinrichtung, insbesondere ein Förderband, umfasst, die der Austragswalze nachgestellt ist und das geformte Teigband mittels der Fördereinrichtung aus der Vorrichtung ausbringbar ist.

Vorteilhaft ist vorgesehen, dass die Vorrichtung drei Antriebe umfasst, wobei die Einzugswalze und die Formwalze und die Austragswalze jeweils separat, vorzugsweise mit unterschiedlichen Drehzahlen, antreibbar sind. Die Drehzahlen und die Umfangsgeschwindigkeiten der Walzen können derart variiert und verstellt werden und so der gewünschte Durchsatz eingestellt werden. Weiters ist es vorteilhaft die Drehzahlen und somit die Umfangsgeschwindigkeiten der Walzen untereinander zu variieren. Dadurch ist es möglich bei unterschiedlichen Teigsorten bzw. Teig - Konsistenzen optimale Voraussetzungen zu schaffen

In einer vorteilhaften Ausführungsform ist vorgesehen, dass die Einzugswalze und/oder die Formwalze und/oder die Austragswalze eine unterschiedliche Profilierung aufweisen, wobei insbesondere die Einzugswalze und die Formwalze einen profilierten Umfang aufweisen und die Austragswalze glatt ausgebildet ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

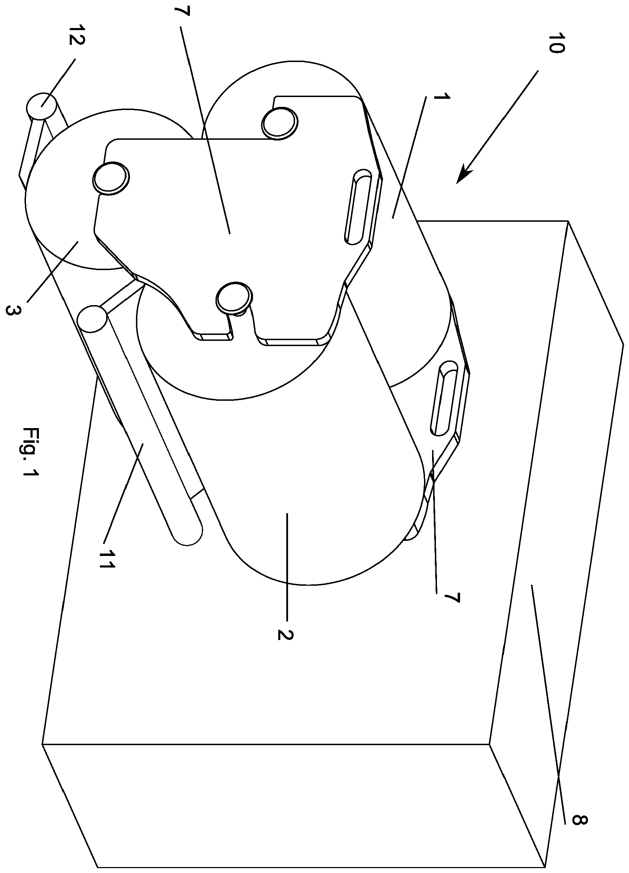

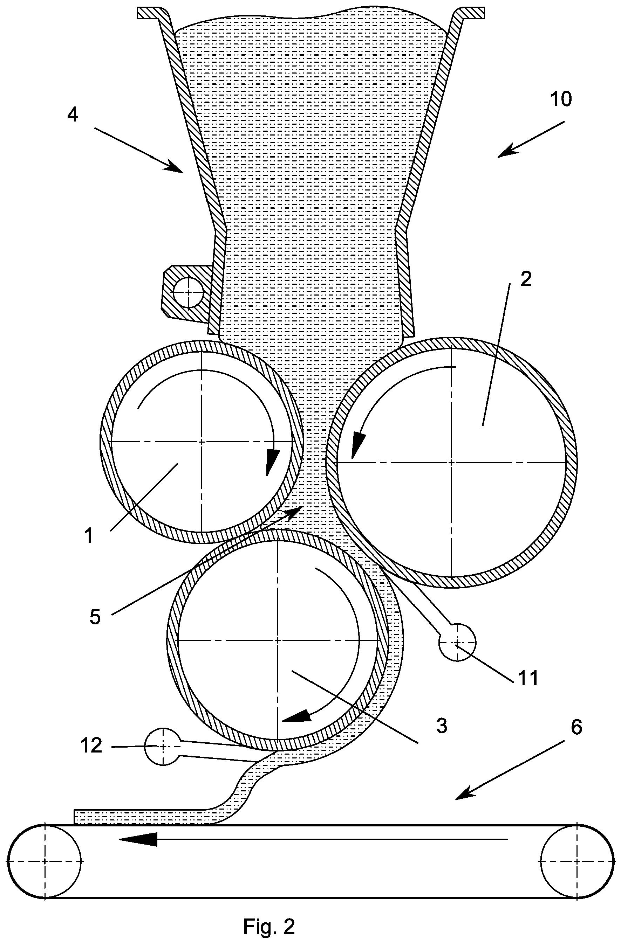

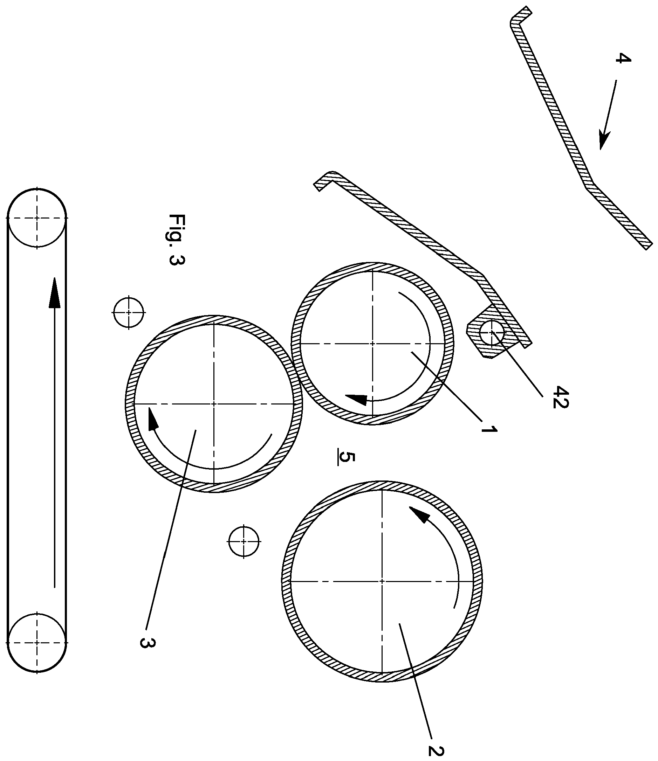

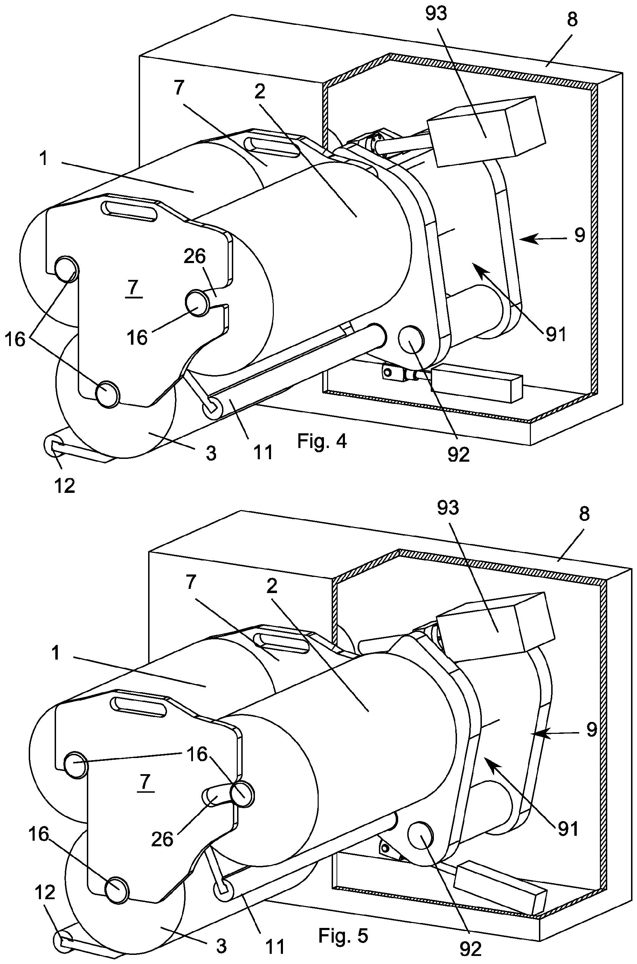

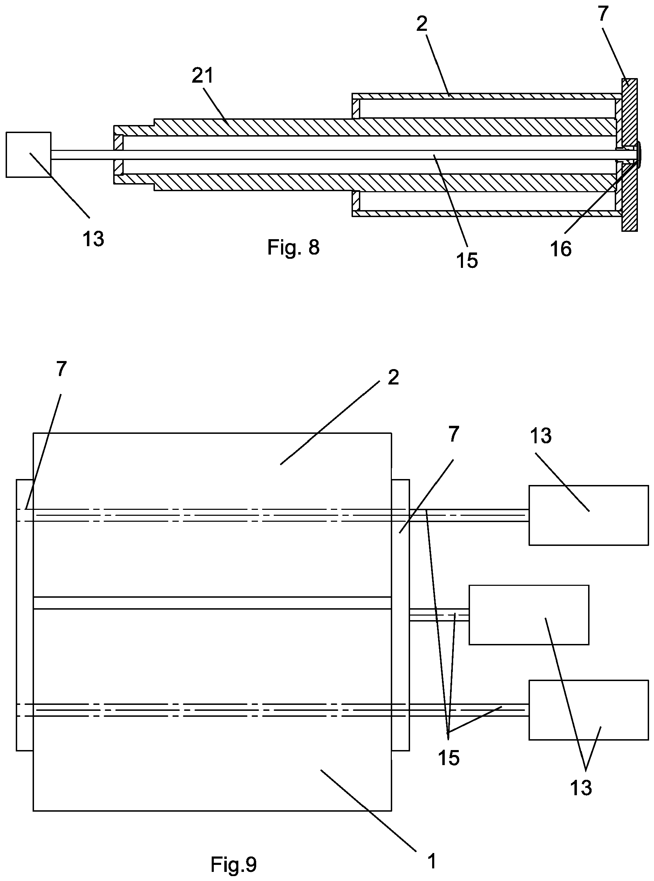

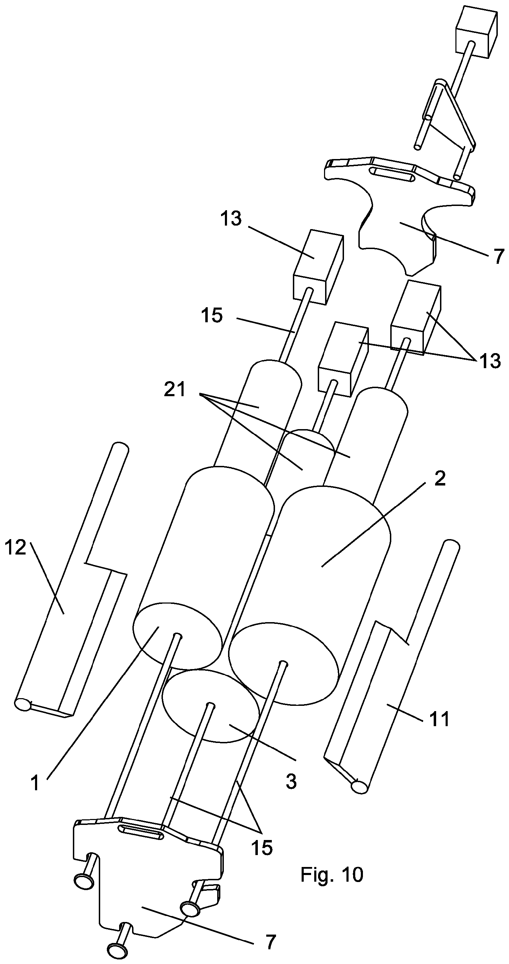

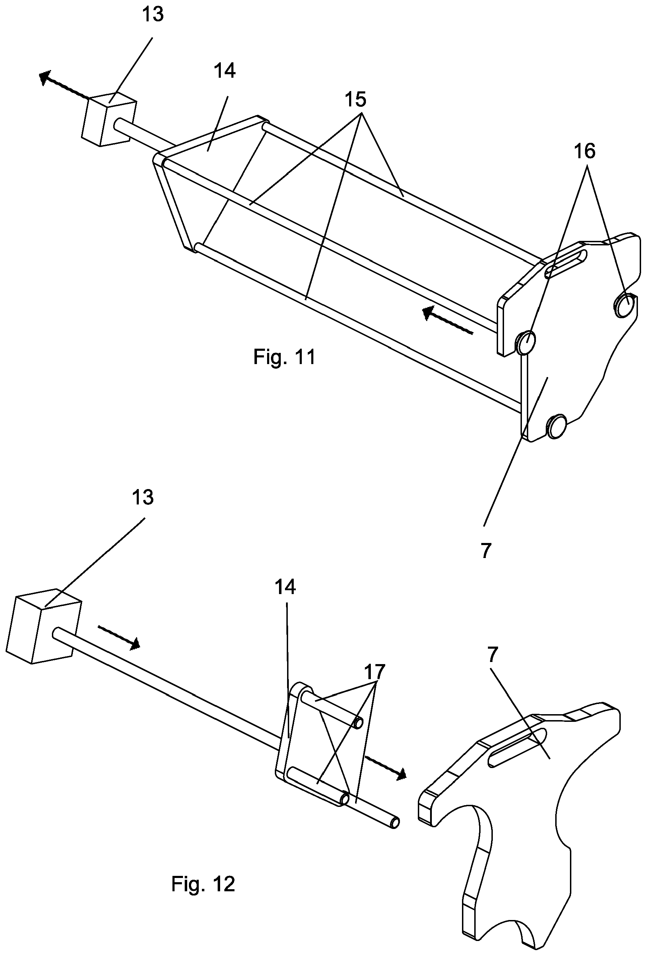

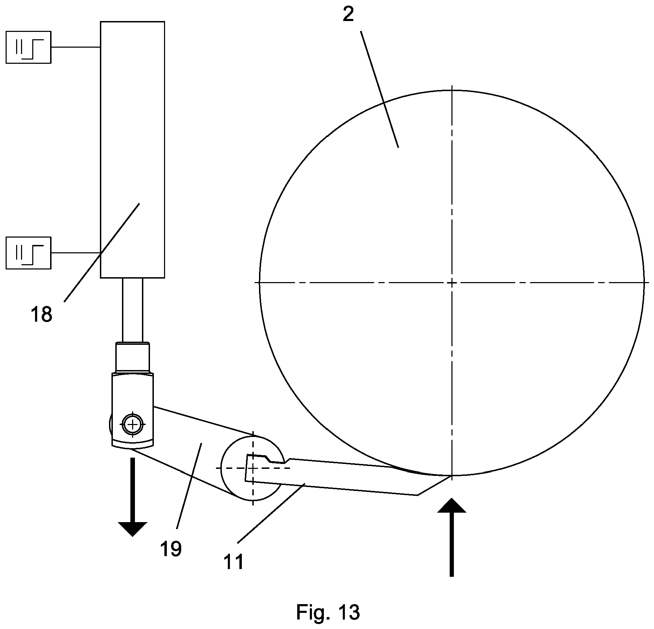

Fig. 1 zeigt eine isometrische Ansicht einer bevorzugten Ausführungsform der erfindungsgemäßen Vorrichtung, Fig. 2 zeigt eine Schnittansicht einer erfindungsgemäßen Vorrichtung mit Fülltrichter, Fig. 3 zeigt eine Ausführung der Vorrichtung gemäß Fig. 2 mit aufgeklapptem Fülltrichter, in den Fig. 4 bis 7 ist eine vorteilhafte Ausführungsform der Erfindung in verschiedenen Funktionszuständen dargestellt, Fig. 8 zeigt eine Schnittansicht einer erfindungsgemäßen Ausführungsform der Formwalze, Fig. 9 zeigt eine Draufsicht einer erfindungsgemäßen Vorrichtung mit drei Spannzylindern, Fig. 10 zeigt eine bevorzugte Ausführungsform der Walzen mit Abdeckschilden und Spannzylindern in einer Explosionsansicht, Fig. 11 zeigt eine alternative Ausführungsform mit einem Spannzylinder und drei Spannachsen, Fig. 12 zeigt eine alternative Ausführungsform eines Spannzylinders zum Anpressen der Abdeckschilde und Fig. 13 zeigt eine Ausführungsform eines schwenkbaren Abstreifers.

In Fig. 1 ist eine erfindungsgemäße Vorrichtung 10 in isometrischer Ansicht dargestellt. Die Vorrichtung 10 umfasst eine Einzugswalze 1, eine Formwalze 2 und eine Austragswalze 3. Die Einzugswalze 1, die Formwalze 2 und die Austragswalze 3 sind jeweils um ihre Achse drehbar gelagert. Die Vorrichtung 10 umfasst weiters einen Antrieb, mit dem die Einzugswalze 1, die Formwalze 2 und die Austragswalze 3 angetrieben werden. Die Vorrichtung 10 umfasst zwei Abdeckschilde 7, die jeweils seitlich an den Stirnseiten der Walzen angeordnet sind und an diesen anliegen. Die Vorrichtung 10 umfasst weiters einen ersten Abstreifer 11, der an der Formwalze 2 an deren Umfang anliegt und einen zweiten Abstreifer 2, der am Umfang der Austragswalze 3 anliegt. Der erste Abstreifer 11 und der zweite Abstreifer 12 weisen die gleiche Breite wie die Walzen, also die Einzugswalze 1, die Formwalze 2 und die Austragswalze 3, auf. Die Einzugswalze 1, die Formwalze 2 und die Austragswalze 3 sind jeweils in einem Lagergehäuse 8 fliegend gelagert. Die Lagerungen bzw. Lagerstellen der einzelnen Walzen, also die Lagerstellen einer schwimmenden Lagerung oder die Fest- bzw. Loslager der Lagerung der Walzen, sind auf einer Seite der Vorrichtung 10 innerhalb des Lagergehäuses 8 angeordnet.

Fig. 2 zeigt eine Schnittansicht einer Ausführungsform der erfindungsgemäßen Vorrichtung 10. Die Vorrichtung 10 weist eine Teigzufuhreinrichtung 4, die als Teigtrichter ausgebildet ist, auf, mit der Teig in die Vorrichtung 10 eingebracht wird. Die Achse der Einzugswalze 1 ist zur Achse der Formwalze 2 in einem Abstand im Bereich der Teigzufuhreinrichtung 4 angeordnet. Durch den Abstand der Achsen der Einzugswalze 1 und der Formwalze 2 zueinander ist zwischen den Walzen ein Spalt, über den der Teig von der Teigzufuhreinrichtung 4 auf den Umfang der Einzugswalze 1 und der Formwalze 2 aufgebracht wird. Die Achsen der Einzugswalze 1, der Formwalze 2 und der Austragswalze 3 sind jeweils zueinander in einem Abstand parallel angeordnet, sodass zwischen der Einzugswalze 1, der Formwalze 2 und der Austragswalze 3 eine Teigkammer 5 ausgebildet ist. Wie in Fig. 2 dargestellt, wird durch Drehung der Einzugswalze 1, beispielsweise im Uhrzeigersinn, und Drehung der Formwalze 2 entgegen der Drehrichtung der Einzugswalze 1, also entgegen dem Uhrzeigersinn, Teig aus der Teigzufuhreinrichtung 4 in die Teigkammer 5 eingebracht. Die Achsen der Formwalze 2 und der Austragswalze 3 sind in einem Abstand zueinander angeordnet, sodass zwischen der Formwalze 2 und der Austragswalze 3 ein Spalt bzw. an deren Umfang ein Abstand zwischen den beiden Walzen ausgebildet ist. Zwischen dem Umfang der Einzugswalze 1 und der Austragswalze 3 ist kein Abstand bzw. nur ein geringer Abstand ausgebildet, sodass Teig aus der Teigkammer 5 nicht zwischen der Einzugswalze 1 und der Austragswalze 3 aus der Teigkammer 5 austreten kann. Durch Drehung der Austragswalze 3 in der selben Drehrichtung wie die Einzugswalze 1 wird nun der Teig aus der Teigkammer 5 zwischen der Formwalze 2 und der Austragswalze 3 aus der Vorrichtung 10 ausgebracht. Beim Ausbringen des Teiges aus der Teigkammer 5 wird ein Teigband mit einer vorgegebenen Dicke produziert. Die Dicke des Teigbandes 2 kann durch Verstellung des Abstandes zwischen der Formwalze 2 und der Austragswalze 3 vorgegeben bzw. eingestellt werden. Die Vorrichtung 10 weist weiters einen ersten Abstreifer 11 auf, der am Umfang der Formwalze 2 im Bereich des Ausgangs der Teigkammer 5 anliegt. Der erste Abstreifer 11 ermöglicht dabei die vollkommene Ablösung des geformten Teigbandes von der Formwalze 2 und glättet gleichzeitig die Oberfläche des zwischen der Formwalze 2 und der Austragswalze 3 gebildeten Teigbandes. Die Vorrichtung 10 weist ebenfalls einen zweiten Abstreifer 12 auf, der am Umfang der Austragswalze 3 anliegt und das geformte Teigband von der Austragswalze 3 abschält bzw. verhindert, dass Teigreste des geformten Teigbandes an der Austragswalze 3 anhaften. Der Austragswalze 3 ist bei dieser Ausführungsform eine Fördereinrichtung 6, in diesem Fall ein Förderband, nachgestellt, auf das das geformte Teigband aufgelegt wird und aus der Vorrichtung 10 entlang der in der Fig. 2 durch den Pfeil dargestellten Transportrichtung ausgebracht wird.

In Fig. 3 ist die erfindungsgemäße Vorrichtung 10 gemäß Fig. 2 in einem weiteren Funktionszustand dargestellt. Zur einfacheren Reinigung der Vorrichtung 10 kann die Teigzufuhreinrichtung 4, die als Teigrichter ausgebildet ist, um eine Schwenkachse 42 verschwenkt werden und so der Zugang zur Teigkammer 5 bzw. zur Einzugswalze 1 und der Formwalze 2 erleichtert werden.

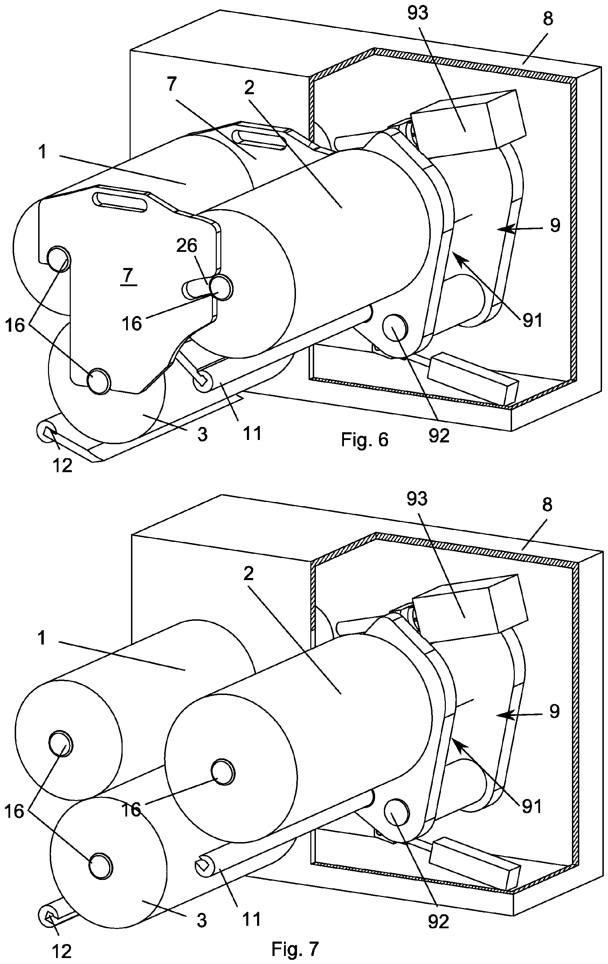

In Fig. 4 ist eine weitere Ausführungsform der erfindungsgemäßen Vorrichtung 10 in perspektivischer Ansicht dargestellt. Die Lagerungen der Einzugswalze 1, der Formwalze 2 und der Austragswalze 3 sind in einem Lagergehäuse 8 angeordnet. Das Lagergehäuse 8 ist hermetisch abgedichtet, wodurch verhindert wird, dass Teig oder Reinigungsmittel in das Lagergehäuse 8 eindringen und die Lagerungen der Formwalze 1, der Austragswalze 3 oder der Einzugswalze 1 beschädigen. Die Vorrichtung 10 umfasst eine Schwenkvorrichtung 9, auf der die Formwalze 2 verschwenkbar gelagert ist. Die Schwenkvorrichtung 9 umfasst einen Schwenkhebel 91, der zwei zueinander im Abstand angeordnete Flansche aufweist, die gemeinsam um eine Schwenkachse 92 verschwenkbar sind. Die Schwenkvorrichtung 9 umfasst weiters einen Pneumatikzylinder 93, der an dem der Schwenkachse 92 gegenüberliegenden Ende des Schwenkhebels 91 angeordnet ist. Durch Veränderung des Hubes des Kolbens des Pneumatikzylinders 93 wird der Schwenkhebel 91 um die Schwenkachse 92 verschwenkt. Die Formwalze 2 ist auf dem Schwenkhebel 91 angeordnet, wobei die Lagerung der Formwalze 2 in dem Schwenkhebel 91 integriert ist. Durch Verschwenkung des Schwenkhebels 91 um die Schwenkachse 92 wird damit die Formwalze 2 mit diesem mit verschwenkt und der Abstand der Achse der Formwalze 2 zur Achse der Einzugswalze 1 bzw. zur Achse der Austragswalze 3 verändert. Auf dem Schwenkhebel 91 ist ebenfalls der erste Abstreifer 11 angeordnet, wodurch bei Verschwenken des Schwenkhebels 91 um die Schwenkachse 92 der Abstreifer 11 mit der Formwalze 2 mit verschwenkt wird. Durch Veränderung des Abstandes der Formwalze 2 zu den jeweils anderen Walzen bzw. zur Austragswalze 3 wird der Abstand zwischen dem Umfang der Austragswalze 3 und der Formwalze 2 verändert und somit die Dicke des Teigbandes, das aus der Teigkammer 5 ausgebracht wird, eingestellt bzw. verändert. Weiters ist es möglich, durch Betätigung des Pneumatikzylinders 93 den Schwenkhebel in eine Position zu verschwenken, in der die Formwalze 2 einen maximalen Abstand zu den anderen Walzen, also der Einzugswalze 1 und der Austragswalze 3 aufweist und der Zugang zur Teigkammer 5 vereinfacht wird (Fig. 5). Wie in Fig. 4 dargestellt, können die Abdeckschilde 7 an den Wellen bzw. Achsen der Walzen eingehängt werden, wodurch nach Verschwenken des Schwenkhebels 91 und damit der Verschwenkung der Formwalze 2 und dem Ausgleiten der Achse bzw. Welle der Formwalze 2 aus einer in den Abdeckschild 7 ausgebildeten Führung 26 dann von den Achsen bzw. Wellen der Austragswalze 3 und der Einzugswalze 1 abgehoben werden. Durch die Abnahme der Abdeckschilde 7 wird der Zugang zur Teigkammer 5 weiters vereinfacht bzw. verbessert und so die Reinigung und Wartung der Austragswalze 3, der Formwalze 2 und der Einzugswalze 1 vereinfacht (Fig. 7).

Optional können der erste Abstreifer 11 und/oder der zweite Abstreifer 12 lösbar an der Vorrichtung 10 oder dem Schwenkhebel 91 angeordnet sein. Wie in Fig. 2 bis 7 dargestellt, können der erste Abstreifer 11 und der zweite Abstreifer 12 an einem Dorn, der an der Vorrichtung 10 oder an der Schwenkvorrichtung 9 angeordnet ist, angeordnet sein und auf diesen beispielsweise ausziehbar angeordnet sein. Durch die Abnahme bzw. das Herausziehen des ersten Abstreifers 11 und des zweiten Abstreifers 12 sind diese separat reinigbar und der Zugang zur Teigkammer 5 wird weiter vereinfacht (Fig. 7).

In Fig. 8 ist eine vorteilhafte Ausführungsform der Formwalze 2 bzw. der Lagerung der Formwalze 2 dargestellt. Die Formwalze 2 ist hohl ausgebildet und auf einer Lagerwelle 21 angeordnet. Die Lagerwelle 21 ist selbst in dem Lagergehäuse 8, das nicht dargestellt ist, gelagert, wodurch die Formwalze 2 neben der Teigkammer 5 eine in dem Lagergehäuse 8 angeordnete fliegende Lagerung aufweist. Die Lagerwelle 21 selbst ist ebenfalls hohl ausgebildet und wird durch eine Spannachse 15 durchsetzt. Die Spannachse 15 durchsetzt die Lagerwelle 21 dabei vollständig und reicht von dem Lagergehäuse 8 bis durch den auf der dem Lagergehäuse 8 gegenüberliegenden Abdeckschild 7. Die Spannachse 15 weist auf der dem Abdeckschild 7 nahen Ende eine pilzförmige Aufweitung 16 auf, die größer als die Ausnehmung des Abdeckschildes 7 ist. Auf dem der pilzförmigen Aufweitung 16 gegenüberliegenden Ende der Spannachse 15 ist ein Spannzylinder 13 angeordnet. Durch den Spannzylinder 13 wird die Spannachse 15 in Richtung des Lagergehäuses 8 bzw. in Richtung des Spannzylinders 13 eingezogen und somit das Abdeckschild 7 an die Formwalze 2 bzw. in Richtung der Teigkammer 5 angedrückt und so die Teigkammer 5 seitlich vorteilhaft abgedichtet.

Alternativ ist vorgesehen, dass, wie in den Fig. 9 und 10 dargestellt, die Vorrichtung 10 drei Spannzylinder 13 und drei Spannachsen 15 umfasst, die jeweils durch eine der Walzen, also die Formwalze 2, die Austragswalze 3 und die Einzugswalze 1 durchgeführt sind und das Abdeckschild 7 jeweils mit einer pilzförmigen Aufweitung 16 an die Walzen andrückt.

Wie in Fig. 11 dargestellt, kann alternativ vorgesehen sein, dass die drei Spannachsen 15, die jeweils eine der Walzen, also die Einzugswalze 1, die Austragswalze 3 oder die Formwalze 2 durchsetzen, auch auf einem Spannflansch 14 angeordnet sind und der Spannflansch 14 mit einem Spannzylinder 13 verbunden ist.

In Fig. 12 ist eine optionale Ausbildung eines Teiles der Vorrichtung 10 in einer isometrischen Darstellung abgebildet. In einer optionalen Ausführungsform kann vorgesehen sein, dass der Abdeckschild 7, der an der dem Lagergehäuse 8 naheliegenden Seite der Teigkammer 5 angeordnet ist, ebenfalls über einen Spannzylinder 13, der mit einem Spannflansch 14 verbunden ist, an die Walzen, also die Einzugswalze 1, die Formwalze 2 und die Austragswalze 3 angedrückt wird. Hierzu kann der Spannflansch 14, wie in Fig. 12 dargestellt, drei Druckdorne 17 umfassen, die den Druck des Spannzylinders 13 auf den Abdeckschild 7 aufbringen und auf diesen gleichmäßig verteilen, sodass der Abdeckschild 7 gleichmäßig an die Walzen angedrückt wird. So ist es möglich, dass die Teigkammer 5 auch auf der dem Lagergehäuse 8 zugewandten Seite einfach abgedichtet wird.

Fig. 13 zeigt eine optionale Ausbildung des ersten Abstreifers 11. Optional kann vorgesehen sein, dass der erste Abstreifer 11 und/oder der zweite Abstreifer 12 auf einem Schwenklager 25 verschwenkbar angeordnet sind. Die Vorrichtung 10 kann einen Zylinder 19 umfassen, der über einen Schwenkhebel 18 mit dem ersten Abstreifer 11 verbunden ist. Wird die Kolbenstange des Zylinders 19 ausgefahren, also der Hub vergrößert, wird der Schwenkhebel in der durch den Pfeil in Fig. 13 dargestellten Richtung verschwenkt und der Abstreifer 11 an dem Umfang der Formwalze 2 angepresst. Wird nun der Zylinder 19 und damit der Schwenkhebel 18 entgegen der in Fig. 13 dargestellten Richtung verstellt, hebt der erste Abstreifer 11 von dem Umfang der Formwalze 2 ab. Durch das Verschwenken des ersten Abstreifers 11 wird eine einfachere Reinigung des Umfangs der Formwalze 2 und ein vereinfachter bzw. verbesserter Zugang zur Teigkammer 5 ermöglicht. Alternativ zu der in Fig. 13 dargestellten Ausführungsform des ersten Schwenkhebels 11 kann ebenfalls oder optional nur der zweite Schwenkhebel 12 verschwenkbar am Umfang der Austragswalze 3 analog anliegen, und durch einen entsprechenden Schwenkhebel mit Zylinder verschwenkt werden.

Im Folgenden wird die Funktion der Vorrichtung anhand einer bevorzugten Ausführungsform der Fig. 3 bis 7 beispielhaft beschrieben:
Wie in Fig. 3 dargestellt, ist im Betriebszustand der Abstand der Achsen der Einzugswalze 1, der Formwalze 2 und der Austragswalze 3 derart in einem Abstand zueinander angeordnet, dass zwischen den Walzen eine Teigkammer 5 (Fig. 2) ausgebildet ist. Seitlich wird die Teigkammer 5 jeweils durch zwei Abdeckschilde 7, eines an der dem Lagergehäuse 8 nahen Ende der Teigkammer 5 und eines an der dem Lagergehäuse 8 entfernten Seite der Teigkammer 5, begrenzt. Der erste Abstreifer 11 liegt am Umfang der Formwalze 2 an und der zweite Abstreifer 12 liegt am Umfang der Austragswalze 3 an. Die Abdeckschilde 7 sind jeweils an den Achsen bzw. Wellen der Einzugswalze 1, der Formwalze 2 und der Austragswalze 3 lösbar befestigt. Die Formwalze 2 ist durch den Schwenkhebel 91 um die Schwenkachse 92 verschwenkbar und so der Abstand der Formwalze 2 zur Einzugswalze 1 und der Austragswalze 3 veränderbar. Durch Veränderung des Abstands der Formwalze 2 zu den anderen Walzen kann die Dicke des produzierten Teigbandes, das zwischen der Formwalze 2 und der Austragswalze 3 aus der Teigkammer 5 ausgebracht wird, in der definierten Dicke eingestellt werden. Die Abdeckschilde 7 weisen eine Führung 26 auf, in der die Achse bzw. Welle der Formwalze 2 bei der Schwenkbewegung des Schwenkhebels 91 um die Schwenkachse 92 geführt wird. Wie in Fig. 5 dargestellt, kann die Formwalze 2 über den Schwenkhebel 91 um die Schwenkachse 92 verschwenkt werden und die Welle bzw. Achse der Formwalze 2 aus der Führung 26 austreten. Durch die Vergrößerung des Abstandes der Formwalze 2 über den Schwenkhebel 91 zur Einzugswalze 1 und der Austragswalze 2 wird die Größe der Teigkammer 5 vergrößert. Um die Reinigung der Formwalze 2 und der Austragswalze 3 bzw. der Teigkammer 5 weiter zu vereinfachen, schwenken, wie in Fig. 6 dargestellt, der erste Abstreifer 11 und der zweite Abstreifer 12 um ihre Schwenkachse und heben damit jeweils vom Umfang der Formwalze 2 bzw. vom Umfang der Austragswalze 3 ab, wodurch der Zugang zum Umfang der Walzen und der Zugang zur Teigkammer 5 weiter erleichtert wird.

Durch das Austreten der Welle bzw. Achse der Formwalze 2 aus der Führung 26 der Abdeckschilde 7 können weiters die Abdeckschilde 7, wie in Fig. 7 dargestellt, abgehoben werden und der Zugang zur Teigkammer 5 wird dann an der dem Lagergehäuse 8 gegenüberliegenden Seite der Teigkammer 5 frei. Durch die fliegende Lagerung der Einzugswalze 1, der Formwalze 2 und der Austragswalze 3 an einer Seite neben der Teigkammer 5 ist es derart möglich, an einer sogenannten Bedienseite die Reinigung der Teigkammer 5 und der Einzugswalze 1, der Formwalze 2 und der Austragswalze 3 einfach durchzuführen und so eine höhere hygienische Reinheit der Vorrichtung 10 zu ermöglichen. Um den Zugang zur Teigkammer 5 und den Walzen weiter erleichtern zu können, ist, wie in Fig. 7 dargestellt, möglich, dass der erste Abstreifer 11 und der zweite Abstreifer 12 an einem Dorn befestigt sind und von diesem abgezogen bzw. aus der Vorrichtung 10 ausgebracht werden.

Optional kann vorgesehen sein, dass die Vorrichtung 10 eine Anzahl von Sensoren umfasst, die den Zustand, die Lage bzw. die Anwesenheit der Abdeckschilde 7, der Einzugswalze 1, der Formwalze 2, der Austragswalze 3, des ersten Abstreifers 11 und/oder des zweiten Abstreifers 12 erfassen und bei Abweichen der Position der einzelnen Teile oder dem Fehlen der einzelnen Teile der Vorrichtung 10 dies dem Benutzer mitteilen können oder gegebenenfalls den Stop bzw. die Inbetriebnahme der Vorrichtung 10 verhindern.

Optional kann dazu vorgesehen sein, dass die Spannzylinder 13 jeweils einen Lage- und/oder Drucksensor aufweisen, mit dem der Zustand bzw. das Vorhandensein der einzelnen Elemente der Vorrichtung 10 festgestellt bzw. erfasst werden kann.

Alternativ kann vorgesehen sein, dass der Schwenkhebel 18 mittels eines Hydraulikzylinders oder Pneumatikzylinders oder elektromechanisch verschwenkt wird und/oder die Spannzylinder 13 als Hydraulikzylinder oder Pneumatikzylinder ausgebildet sind oder die Spannachsen 15 elektromechanisch betätigt werden.

Eine weitere optionale Ausführungsform der erfindungsgemäßen Vorrichtung 10 sieht vor, dass die Vorrichtung 10 drei Antriebe umfasst. Mittels der drei Antriebe können dann jeweils die Einzugswalze 1, die Formwalze 2 und die Austragswalze 3 separat angetrieben werden. Durch die separaten Antriebe ist es möglich die Einzugswalze 1, die Formwalze 2 und die Austragswalze 3 mit unterschiedlichen Drehzahlen anzutreiben und so in unterschiedlichen Bereichen der Vorrichtung unterschiedliche Teigbewegungen zu erreichen.

Weiters kann vorteilhaft die Einzugswalze 1 und/oder die Formwalze 2 und/oder die Austragswalze 3 eine unterschiedliche Profilierung aufweisen. So kann beispielsweise vorgesehen sein, dass die Einzugswalze 1 und die Formwalze 2 einen profilierten Umfang aufweisen um eine gute Haftung des Teiges zu erreichen bzw. eine vorteilhafte Verformung des Teiges bewirken zu können. Die Austragswalze 3 kann auch glatt ausgebildet sein, um eine glatte Oberfläche des Teigbandes zu erzielen.

## Patentansprüche

1. Vorrichtung (10) zum Formen eines Teigbandes umfassend eine Teigzufuhreinrichtung (4) mit der Teig in die Vorrichtung (10) einbringbar ist, eine um ihre Achse drehbare Einzugswalze (1), eine um ihre Achse drehbare Formwalze (2), eine um ihre Achse drehbare Austragswalze (3) und zumindest einen Antrieb mit dem die Einzugswalze (1) und/oder die Formwalze (2) und/oder die Austragswalze (3) antreibbar sind,
- wobei die Achsen der Einzugswalze (1), der Formwalze (2) und der Austragswalze (3), parallel in einem Abstand zueinander angeordnet sind und zwischen der Einzugswalze (1), der Formwalze (2) und der Austragswalze (3) eine Teigkammer (5) ausgebildet ist,
- wobei die Vorrichtung zwei Abdeckschilde (7) aufweist, die die Teigkammer (5) seitlich, insbesondere an den Stirnseiten der Einzugswalze (1), der Formwalze (2) und der Austragswalze (3), begrenzen,
- wobei die Einzugswalze (1) und die Formwalze (2) im Bereich der Teigzufuhreinrichtung (4) in einem Abstand zueinander angeordnet sind, dass Teig von der Teigzufuhreinrichtung (4) auf den Umfang der Einzugswalze (1) und der Formwalze (2) aufbringbar und durch Drehung der Einzugswalze (1) und der Formwalze (2) in die Teigkammer (5) einbringbar ist, und
- wobei die Formwalze (2) und die Austragswalze (3) in einem Abstand zueinander angeordnet sind, dass Teig zwischen der Formwalze (2) und der Austragswalze (3) mit einer definierten Dicke aus der Teigkammer (5) als geformtes Teigband ausbringbar ist, dadurc
h gekennzeichnet, dass
die Einzugswalze (1), die Formwalze (2) und die Austragswalze (3), fliegend gelagert sind und dass die Lagerungen der Einzugswalze (1), der Formwalze (2) und der Austragswalze (3) auf einer Seite der Vorrichtung (10) neben der Teigkammer (5) angeordnet sind,
wobei die Lagerungen der Einzugswalze (1), der Formwalze (2) und der Austragswalze (3) in einem Lagergehäuse (8) angeordnet sind,
wobei die Vorrichtung (10) zumindest einen Spannzylinder (13) umfasst, der vorzugsweise in dem Lagergehäuse (8) angeordnet ist, wobei der Spannzylinder (13) zumindest eines der Abdeckschilde (7) in Richtung der Achse der Einzugswalze (1) und/oder der Formwalze (2) und/oder der Austragswalze (3) an die Einzugswalze (1), die Formwalze (2) und die Austragswalze (3) andrückbar ist, wobei die Einzugswalze (1) und/oder die Formwalze (2) und/oder die Austragswalze (3) hohl ausgebildet ist, wobei die Vorrichtung (10) zumindest eine, längliche Spannachse (15) aufweist,
- wobei die Spannachse (15) durch die Einzugswalze (1) oder die Formwalze (2) oder die Austragswalze (3) durchgeführt ist und die jeweilige Walze auf der Spannachse (15) drehbar gelagert ist,
- wobei die Spannachse (15) mit dem Spannzylinder (13) verbunden ist und zumindest eines der Abdeckschilde (7), insbesondere der dem Lagergehäuse (8) bezüglich der Walzen gegenüberliegende Abdeckschild (7), mit der Spannachse (15) derart, insbesondere lösbar, verbunden ist, dass bei Betätigung des Spannzylinders (13) zumindest einer der Abdeckschilde (7) in Richtung der Achse der Einzugswalze (1), der Formwalze (2) und der Austragswalze (3) an die Einzugswalze (1), die Formwalze (2) und die Austragswalze (3) andrückbar ist.

2. Vorrichtung nach Anspruch 1, **dadurch gekennzeichnet, dass** das hermetisch abgedichtet ist.

3. Vorrichtung nach einem der vorangehenden Ansprüche, **dadurch gekennzeichnet, dass** die Vorrichtung (10) eine Schwenkvorrichtung (9) umfasst, wobei die Einzugswalze (1) und/oder die Formwalze (2) und/oder die Austragswalze (3) mittels der Schwenkvorrichtung (9) verschwenkbar sind, wobei der Abstand der Achse der Einzugswalze (1) und/oder der Formwalze (2) und/oder der Austragswalze (3) zu den Achsen zumindest einer der jeweils anderen Walzen verstellbar ist.

4. Vorrichtung nach Anspruch 3, **dadurch gekennzeichnet, dass** die Schwenkvorrichtung (9) einen Schwenkhebel (91) umfasst, wobei der Schwenkhebel (91) um eine Schwenkachse (92), insbesondere mittels eines Hydraulik- oder Pneumatikzylinders oder elektromechanisch, verschwenkbar ist, und wobei die Lagerung der Einzugswalze (1) und/oder der Formwalze (2) und/oder der Austragswalze (3) in dem Schwenkhebel (91) angeordnet ist, wobei bei Verschwenken des Schwenkhebels (91) der Abstand der Achse der Einzugswalze (1) und/oder der Formwalze (2) und/oder der Austragswalze (3) zu den jeweils anderen Walzen verstellbar und einstellbar ist.

5. Vorrichtung (10) nach einem der vorangehenden Ansprüche, **dadurch gekennzeichnet, dass** die Vorrichtung (10) einen ersten Abstreifer (11) umfasst, wobei der erste Abstreifer (11) am Umfang der Formwalze (2) anliegt, wobei Teig vom Umfang der Formwalze (2) mittels des ersten Abstreifers (11) abhebbar ist und wobei insbesondere der erste Abstreifer (11) verschwenkbar und/oder verschiebbar angeordnet und vom Umfang der Formwalze (2) abhebbar ist.

6. Vorrichtung (10) nach einem der vorangehenden Ansprüche, **dadurch gekennzeichnet, dass** die Vorrichtung (10) einen zweiten Abstreifer (12) umfasst, wobei der zweite Abstreifer (12) am Umfang der Austragswalze (3) anliegt und Teig, insbesondere das geformte Teigband, von der Austragswalze (3) abhebbar ist und wobei insbesondere der zweite Abstreifer (12) verschwenkbar und/oder verschiebbar angeordnet und vom Umfang der Austragswalze (3) abhebbar ist.

7. Vorrichtung nach einem der Ansprüche 5 oder 6, **dadurch gekennzeichnet, dass** der erste Abstreifer (11) und/oder der zweite Abstreifer (12), vorzugsweise manuell, lösbar, insbesondere auf einem Dorn ausziehbar, an der Vorrichtung (10) angeordnet sind.

8. Vorrichtung (10) nach einem der vorangehenden Ansprüche, **dadurch gekennzeichnet, dass** die Zuführeinrichtung (4) einen Fülltrichter (41) umfasst, der um eine Schwenkachse (42) verschenkbar ist.

9. Vorrichtung (10) nach einem der vorangehenden Ansprüche, **dadurch gekennzeichnet, dass** die Abdeckschilde (7) lösbar an der Vorrichtung (10) befestigt sind.

10. Vorrichtung (10) nach einem der vorangehenden Ansprüche, **dadurch gekennzeichnet, dass** die Vorrichtung (10) drei Spannzylinder (13), umfasst, die vorzugsweise in dem Lagergehäuse (8) angeordnet sind, wobei die Spannzylinder (13) zumindest eines der Abdeckschilde (7) in Richtung der Achse der Einzugswalze (1) und der Formwalze (2) und der Austragswalze (3) an die Einzugswalze (1), die Formwalze (2) und die Austragswalze (3) andrückbar ist.

11. Vorrichtung (10) nach Anspruch 10, **dadurch gekennzeichnet, dass** die Einzugswalze (1) und die Formwalze (2) und die Austragswalze (3) hohl ausgebildet sind, wobei die Vorrichtung (10) drei längliche Spannachsen (15) aufweist,
- wobei die Spannachsen (15) jeweils eine den drei Spannachsen (15), durch die Einzugswalze (1) und die Formwalze (2) und die Austragswalze (3) durchgeführt sind und die jeweilige Walze auf der der jeweiligen Spannachse (15) drehbar gelagert ist,
- wobei alle Spannachsen (15) über einen Spannflansch (14) mit dem Spannzylinder (13) verbunden sind und zumindest eines der Abdeckschilde (7), insbesondere der dem Lagergehäuse (8) bezüglich der Walzen gegenüberliegende Abdeckschild (7), mit den Spannachsen (15) derart, insbesondere lösbar, verbunden ist, dass bei Betätigung des Spannzylinders (12) zumindest einer der Abdeckschilde (7), insbesondere der dem Lagergehäuse (8) gegenüberliegende Abdeckschild (7), in Richtung der Achse der Einzugswalze (1), der Formwalze (2) und der Austragswalze (3) an die Einzugswalze (1), die Formwalze (2) und die Austragswalze (3) andrückbar ist.

12. Vorrichtung (10) nach einem der vorangehenden Ansprüche, **dadurch gekennzeichnet, dass** die Vorrichtung (10), insbesondere die Spannzylinder (13), eine Anzahl von Sensoren, umfasst, mit der die Lage und/oder das Vorhandensein der Einzugswalze (1) und/oder der Formwalze (2) und/oder der Austragswalze (3) und/oder der Abdeckschilde (7) und/oder des ersten Abstreifers (11) und/oder des zweiten Abstreifers (12) ermittelbar ist.

13. Vorrichtung (10) nach einem der vorangehenden Ansprüche, **dadurch gekennzeichnet, dass** die Vorrichtung (10) eine Fördereinrichtung (6), insbesondere ein Förderband, umfasst, die der Austragswalze (3) nachgestellt ist und das geformte Teigband mittels der Fördereinrichtung (6) aus der Vorrichtung (10) ausbringbar ist.

14. Vorrichtung (10) nach einem der vorangehenden Ansprüche, **dadurch gekennzeichnet, dass** die Vorrichtung drei Antriebe umfasst, wobei die Einzugswalze (1) und die Formwalze (2) und die Austragswalze (3) jeweils separat, vorzugsweise mit unterschiedlichen Drehzahlen, antreibbar sind.

15. Vorrichtung nach einem der vorangehenden Ansprüche, **dadurch gekennzeichnet, dass** die Einzugswalze (1) und/oder die Formwalze (2) und/oder die Austragswalze (3) eine unterschiedliche Profilierung aufweisen, wobei insbesondere die Einzugswalze (1) und die Formwalze (2) einen profilierten Umfang aufweisen und die Austragswalze (3) glatt ausgebildet ist.

## Claims

1. Device (10) for forming a dough strip, comprising a dough supply device (4) by means of which dough can be introduced into the device (10), a feed roller (1) rotatable about its axle, a forming roller (2) rotatable about its axle, a discharge roller (3) rotatable about its axle and at least one drive means by which the feed roller (1) and/or the forming roller (2) and/or the discharge roller (3) can be driven,
- wherein the axes of the feed roller (1), the forming roller (2) and the discharge roller (3) are arranged parallel and spaced apart from one another and a dough chamber (5) is formed between the feed roller (1), the forming roller (2) and the discharge roller (3),
- wherein the device has two cover shields (7) which delimit the dough chamber (5) laterally, in particular at the end faces of the feed roller (1), the forming roller (2) and the discharge roller (3),
- wherein the feed roller (1) and the forming roller (2) are arranged in the region of the dough supply device (4) spaced apart from one another, that dough can be applied by the dough supply device (4) onto the periphery of the feed roller (1) and the forming roller (2) and can be introduced into the dough chamber (5) by rotation of the feed roller (1) and the forming roller (2),
- wherein the forming roller (2) and the discharge roller (3) are arranged spaced apart from one another, that dough can be discharged from the dough chamber (5) as a formed dough strip with a defined thickness between the forming roller (2) and the discharge roller (3),
**characterised in that**
the feed roller (1), the forming roller (2) and the discharge roller (3) are mounted in a floating manner and that the bearings of the feed roller (1), the forming roller (2) and the discharge roller (3) are arranged on one side of the apparatus (10) adjacent to the dough chamber (5),
wherein the bearings of the feed roller (1), the forming roller (2) and the discharge roller (3) are arranged in a bearing housing (8),
wherein the device (10) comprises at least one clamping cylinder (13), which is preferably arranged in the bearing housing (8), wherein the clamping cylinder (13) at least one of the cover shields (7) can be pressed against the feed roller (1), the forming roller (2) and the discharge roller (3) in the direction of the axle of the feed roller (1) and/or the forming roller (2) and/or the discharge roller (3),
wherein the feed roller (1) and/or the forming roller (2) and/or the discharge roller (3) is hollow, wherein the device (10) has at least one elongated clamping shaft (15),
- wherein the clamping shaft (15) is passed through the feed roller (1) or the forming roller (2) or the discharge roller (3) and the respective roller is rotatably mounted on the clamping shaft (15),
- wherein the clamping shaft (15) is connected to the clamping cylinder (13) and at least one of the cover shields (7), in particular the cover shield (7) on the opposite side of the rollers to the bearing housing (8), is connected to the clamping shaft (15) in such a way, in particular releasably, that, when the tensioning cylinder (13) is actuated, at least one of the cover shields (7) can be pressed against the feed roller (1), the forming roller (2) and the discharge roller (3) in the direction of the axle of the feed roller (1), the forming roller (2) and the discharge roller (3).

2. Device according to claim 1, **characterised in that** the bearing housing is hermetically sealed.

3. Device according to any one of the preceding claims, **characterised in that** the device (10) comprises a pivot device (9), wherein the feed roller (1) and/or the forming roller (2) and/or the discharge roller (3) are pivotable by means of the pivot device (9), wherein the distance of the axle of the feed roller (1) and/or the forming roller (2) and/or the discharge roller (3) from the axles of at least one of the respective other rollers is adjustable.

4. Device according to claim 3, **characterised in that** the pivot device (9) comprises a pivot lever (91), the pivot lever (91) being pivotable about a pivot axis (92), in particular by means of a hydraulic or pneumatic cylinder or electromechanically, and wherein the mounting of the feed roller (1) and/or the forming roller (2) and/or the discharge roller (3) is arranged in the pivot lever (91), wherein the distance of the axle of the feed roller (1) and/or the forming roller (2) and/or the discharge roller (3) from the respective other rollers is adjustable and selectable when the pivot lever (91) is pivoted.

5. Device (10) according to any one of the preceding claims, **characterised in that** the device (10) comprises a first scraper (11), wherein the first scraper (11) abuts the periphery of the forming roller (2), wherein dough can be lifted off the periphery of the forming roller (2) by means of the first scraper (11) and wherein in particular the first scraper (11) is arranged pivotably and/or displaceably and can be lifted off the periphery of the forming roller (2).

6. Device (10) according to any one of the preceding claims, **characterised in that** the device (10) comprises a second scraper (12), wherein the second scraper (12) abuts the periphery of the discharge roller (3) and dough, in particular the formed dough strip, can be lifted off the discharge roller (3) and wherein in particular the second scraper (12) is arranged pivotably and/or displaceably and can be lifted off the periphery of the discharge roller (3).

7. Device according to any one of claims 5 or 6, **characterised in that** the first scraper (11) and/or the second scraper (12) are arranged on the device (10), preferably manually, releasably, in particular extendably on a mandrel.

8. Device (10) according to any one of the preceding claims, **characterised in that** the supply device (4) comprises a hopper (41) which can be pivoted about a pivot axis (42).

9. Device (10) according to any one of the preceding claims, **characterised in that** the cover shields (7) are releasably secured to the device (10).

10. Device (10) according to any one of the preceding claims, **characterised in that** the device (10) comprises three clamping cylinders (13), which are preferably arranged in the bearing housing (8), wherein the clamping cylinders (13) at least one of the cover shields (7) can be pressed in the direction of the axle of the feed roller (1) and the forming roller (2) and the discharge roller (3) against the feed roller (1), the forming roller (2) and the discharge roller (3).

11. Device (10) according to claim 10, **characterised in that** the feed roller (1) and the forming roller (2) and the discharge roller (3) are hollow, wherein the device (10) has three elongated clamping shafts (15),
- wherein the clamping shafts (15) each one of the three clamping shafts (15), are passed through the feed roller (1) and the forming roller (2) and the discharge roller (3), and the respective roller is rotatably mounted on the respective clamping shaft (15),
- wherein all of the clamping shafts (15) are connected to the clamping cylinder (13) via a clamping flange (14) and at least one of the cover shields (7), in particular the cover shield (7) on the opposite side of the rollers to the bearing housing (8), is connected to the clamping shafts (15) in such a way, in particular detachably, **in that**, when the clamping cylinder (12) is actuated, at least one of the cover shields (7), in particular the cover shield (7) opposite the bearing housing (8), can be pressed against the feed roller (1), the forming roller (2) and the discharge roller (3) in the direction of the axle of the feed roller (1), the forming roller (2) and the discharge roller (3).

12. Device (10) according to any one of the preceding claims, **characterised in that** the device (10), in particular the clamping cylinders (13), comprises a number of sensors, with which the position and/or the presence of the feed roller (1) and/or the forming roller (2) and/or the discharge roller (3) and/or the cover shields (7) and/or the first scraper (11) and/or the second scraper (12) can be determined.

13. Device (10) according to any one one of the preceding claims, **characterised in that** the device (10) comprises a conveyor device (6), in particular a conveyor belt, which is positioned downstream of the discharge roller (3) and the formed dough strip can be discharged from the apparatus (10) by means of the conveyor device (6).

14. Device (10) according to any one of the preceding claims, **characterised in that** the apparatus comprises three drive means, wherein the feed roller (1) and the forming roller (2) and the discharge roller (3) can each be driven separately, preferably at different speeds.

15. Device according to any one of the preceding claims, **characterised in that** the feed roller (1) and/or the forming roller (2) and/or the discharge roller (3) have different profiles, wherein in particular the feed roller (1) and the forming roller (2) have a profiled periphery and the discharge roller (3) is smooth.

## Revendications

1. Dispositif (10) permettant de façonner un ruban de pâte comprenant un appareil d'acheminement de pâte (4) à l'aide duquel la pâte peut être introduite dans le dispositif (10), un rouleau d'alimentation (1) pouvant tourner sur son axe, un rouleau de façonnage (2) pouvant tourner sur son axe, un rouleau de distribution (3) pouvant tourner sur son axe et au moins un entraînement à l'aide duquel le rouleau d'alimentation (1) et/ou le rouleau de façonnage (2) et/ou le rouleau de distribution (3) peuvent être entraînés,
- dans lequel les axes du rouleau d'alimentation (1), du rouleau de façonnage (2) et du rouleau de distribution (3) sont disposés parallèlement les uns aux autres de manière espacée et une chambre de pâte (5) est formée entre le rouleau d'alimentation (1), le rouleau de façonnage (2) et le rouleau de distribution (3),
- dans lequel le dispositif comprend deux plaques de recouvrement (7) qui limitent la chambre de pâte (5) latéralement, en particulier au niveau des côtés frontaux du rouleau d'alimentation (1), du rouleau de façonnage (2) et du rouleau de distribution (3),
- dans lequel le rouleau d'alimentation (1) et le rouleau de façonnage (2) sont disposés à distance l'un de l'autre dans la région de l'appareil d'acheminement de pâte (4), que la pâte peut être appliquée par l'appareil d'acheminement de pâte (4) sur le pourtour du rouleau d'alimentation (1) et du rouleau de façonnage (2) et peut être introduite dans la chambre de pâte (5) par rotation du rouleau d'alimentation (1) et du rouleau de façonnage (2), et
- dans lequel le rouleau de façonnage (2) et le rouleau de distribution (3) sont disposés à distance l'un de l'autre, que la pâte peut être extraite de la chambre de pâte (5) entre le rouleau de façonnage (2) et le rouleau de distribution (3) sous forme de ruban de pâte façonné présentant une épaisseur définie,
**caractérisé en ce que**
le rouleau d'alimentation (1), le rouleau de façonnage (2) et le rouleau de distribution (3) sont montés en porte-à-faux et les paliers du rouleau d'alimentation (1), du rouleau de façonnage (2) et du rouleau de distribution (3) sont disposés sur un côté du dispositif (10) près de la chambre de pâte (5),
dans lequel les paliers du rouleau d'alimentation (1), du rouleau de façonnage (2) et du rouleau de distribution (3) sont disposés dans un logement de palier (8),
dans lequel le dispositif (10) comprend au moins un cylindre de serrage (13) qui est disposé de préférence dans le logement de palier (8), le cylindre de serrage (13) d'au moins une des plaques de recouvrement (7) pouvant être pressé en direction de l'axe du rouleau d'alimentation (1) et/ou du rouleau de façonnage (2) et/ou du rouleau de distribution (3) contre le rouleau d'alimentation (1), le rouleau de façonnage (2) et le rouleau de distribution (3),
dans lequel
le rouleau d'alimentation (1) et/ou le rouleau de façonnage (2) et/ou le rouleau de distribution (3) sont configurés creux, le dispositif (10) présentant au moins un axe de serrage oblong (15),
- dans lequel l'axe de serrage (15) est réalisé à travers le rouleau d'alimentation (1) ou le rouleau de façonnage (2) ou le rouleau de distribution (3) et le rouleau respectif est monté rotatif sur l'axe de serrage (15),
- dans lequel l'axe de serrage (15) est relié au cylindre de serrage (13), et au moins une des plaques de recouvrement (7), en particulier la plaque de recouvrement (7) opposée au logement de palier (8) par rapport aux rouleaux, est reliée, en particulier de manière amovible, à l'axe de serrage (15), de sorte que, lorsque le cylindre de serrage (13) est actionné, au moins une des plaques de recouvrement (7) peut être poussée en direction de l'axe du rouleau d'alimentation (1), du rouleau de façonnage (2) et du rouleau de distribution (3) contre le rouleau d'alimentation (1), le rouleau de façonnage (2) et le rouleau de distribution (3).

2. Dispositif selon la revendication 1, **caractérisé en ce que** le logement de palier est hermétiquement étanche.

3. Dispositif selon l'une quelconque des revendications précédentes, **caractérisé en ce que** le dispositif (10) comprend un positionneur (9), dans lequel le rouleau d'alimentation (1) et/ou le rouleau de façonnage (2) et/ou le rouleau de distribution (3) peuvent être basculés au moyen du positionneur (9), la distance de l'axe du rouleau d'alimentation (1) et/ou du rouleau de façonnage (2) et/ou du rouleau de distribution (3) étant réglable par rapport aux axes d'au moins un des autres rouleaux respectifs.

4. Dispositif selon la revendication 3, **caractérisé en ce que** le positionneur (9) comprend un bras mobile (91), le bras mobile (91) étant réglable autour d'un pivot (92), en particulier au moyen d'un cylindre hydraulique ou pneumatique ou par un moyen électromécanique, et dans lequel le palier du rouleau d'alimentation (1) et/ou du rouleau de façonnage (2) et/ou du rouleau de distribution (3) est disposé dans le bras mobile (91), la distance de l'axe du rouleau d'alimentation (1) et/ou du rouleau de façonnage (2) et/ou du rouleau de distribution (3) étant réglable ou orientable par rapport aux autres rouleaux respectifs lors du pivotement du bras mobile (91).

5. Dispositif (10) selon l'une quelconque des revendications précédentes, **caractérisé en ce que** le dispositif (10) comprend un premier racleur (11), le premier racleur (11) reposant sur le pourtour du rouleau de façonnage (2), moyennant quoi la pâte peut être décollée du pourtour du rouleau de façonnage (2) au moyen du premier racleur (11) et moyennant quoi en particulier le premier racleur (11) est agencé pivotant et/ou coulissant et peut être dégagé du pourtour du rouleau de façonnage (2).

6. Dispositif (10) selon l'une quelconque des revendications précédentes, **caractérisé en ce que** le dispositif (10) comprend un second racleur (12), le second racleur (12) reposant sur le pourtour du rouleau de distribution (3) et la pâte, en particulier le ruban de pâte formé, peut être décollée du rouleau de distribution (3) et moyennant quoi en particulier le second racleur (12) est agencé pivotant et/ou coulissant et peut être dégagé du pourtour du rouleau de distribution (3).

7. Dispositif selon l'une quelconque des revendications 5 ou 6, **caractérisé en ce que** le premier racleur (11) et/ou le second racleur (12), sont agencés contre le dispositif (10), de préférence manuellement, de façon amovible, en particulier en étant extensibles sur un dôme.

8. Dispositif (10) selon l'une quelconque des revendications précédentes, **caractérisé en ce que** l'appareil d'acheminement (4) comprend une trémie d'alimentation (41) qui est pivotante autour d'un pivot (42).

9. Dispositif (10) selon l'une quelconque des revendications précédentes, **caractérisé en ce que** les plaques de recouvrement (7) sont fixées de façon amovible sur le dispositif (10).

10. Dispositif (10) selon l'une quelconque des revendications précédentes, **caractérisé en ce que** le dispositif (10) comprend trois cylindres de serrage (13) qui sont agencés de préférence dans le logement de palier (8), dans lequel le cylindre de serrage (13) d'au moins une des plaques de recouvrement (7) peut être poussé en direction de l'axe du rouleau d'alimentation (1) et du rouleau de façonnage (2) et du rouleau de distribution (3) contre le rouleau d'alimentation (1), le rouleau de façonnage (2) et le rouleau de distribution (3).

11. Dispositif (10) selon la revendication 10, **caractérisé en ce que** le rouleau d'alimentation (1) et le rouleau de façonnage (2) et le rouleau de distribution (3) sont configurés creux, le dispositif (10) comportant trois axes de serrage oblongs (15),
- les axes de serrage (15), respectivement un des trois axes de serrage (15), étant réalisés à travers le rouleau d'alimentation (1) et le rouleau de façonnage (2) et le rouleau de distribution (3) et le rouleau respectif étant monté rotatif sur l'axe de serrage respectif (15),
- tous les axes de serrage (15) étant reliés via une bride de serrage (14) au cylindre de serrage (13) et au moins une des plaques de recouvrement (7), en particulier la plaque de recouvrement (7) opposée au logement de palier (8) par rapport aux rouleaux, est reliée, en étant en particulier amovible, aux axes de serrage (15), de sorte que, lorsque le cylindre de serrage (12) est actionné, au moins une des plaques de recouvrement (7), en particulier la plaque de recouvrement (7) opposée au logement de palier (8), peut être poussée en direction de l'axe du rouleau d'alimentation (1), du rouleau de façonnage (2) et du rouleau de distribution (3) contre le rouleau d'alimentation (1), le rouleau de façonnage (2) et le rouleau de distribution (3).

12. Dispositif (10) selon l'une quelconque des revendications précédentes, **caractérisé en ce que** le dispositif (10), en particulier le cylindre de serrage (13), comprend un nombre de capteurs qui permettent de déterminer la position et/ou la présence du rouleau d'alimentation (1) et/ou du rouleau de façonnage (2) et/ou du rouleau de distribution (3) et/ou de la plaque de recouvrement (7) et/ou du premier racleur (11) et/ou du second racleur (12).

13. Dispositif (10) selon l'une quelconque des revendications précédentes, **caractérisé en ce que** le dispositif (10) comprend un transporteur (6), en particulier un transporteur à bande, qui est ajusté au rouleau de distribution (3) et le ruban de pâte formé peut être extrait du dispositif (10) au moyen du transporteur (6).

14. Dispositif (10) selon l'une quelconque des revendications précédentes, **caractérisé en ce que** le dispositif comprend trois entraînements, le rouleau d'alimentation (1) et le rouleau de façonnage (2) et le rouleau de distribution (3) pouvant être entraînés séparément, de préférence à différentes vitesses de rotation.

15. Dispositif selon l'une quelconque des revendications précédentes, **caractérisé en ce que** le rouleau d'alimentation (1) et/ou le rouleau de façonnage (2) et/ou le rouleau de distribution (3) présentent un profilage variable, en particulier le rouleau d'alimentation (1) et le rouleau de façonnage (2) présentant un pourtour profilé et le rouleau de distribution (3) est configuré lisse.
